# EUROPEAN PATENT APPLICATION

(11) **EP 2 709 260 A1**
(43) Date of publication of application: **19.03.2014**
(21) Application number: 11865333.6
(22) Date of filing: 22.11.2011
(51) Int. Cl.: H02M 7/48, H02M 7/537

(54) **SAFETY PROTECTION-TYPE POWER SUPPLY SYSTEM**

(30) Priority: 09.05.2011 CN 201110117100
(71) Applicant: Longi Magnet Co., Ltd, Fushun, Liaoning 113122 (CN)
(72) Inventor: ZHANG, Chengchen, Fushun Liaoning 113122 (CN); FAN, Mingyuan, Fushun Liaoning 113122 (CN); LV, Fengjun, Fushun Liaoning 113122 (CN); LIU, Bo, Fushun Liaoning 113122 (CN); SHAO, Guicheng, Fushun Liaoning 113122 (CN)
(74) Representative: Stuttard, Garry Philip
(86) International application number: PCT/CN2011/082599
(87) International publication number: WO 2012/151935

(57) **Abstract**

A safety protected power source system is disclosed in the invention, which mainly includes a DC power source, a circuit interrupter, a switch element, a step-up transformer, a single-phase rectification module, a frequency converter, a controlling power source, a CPU board, an IGBT driving board, and a feedback module. A high-frequency alternating power source formed through four switch elements from the DC power source via the circuit interrupter is provided to the step-up transformer mainly for the power source system, within which the voltage being stepped-up, a DC power source that is generated through single-phase rectification being provided to the frequency converter, and then control motors' operation according to the characteristics of the frequency converter. The power source system has the advantages of strongly adaptability, easy maintenance, having no sparks and high reliability. It could be utilized in a wide range in various kinds of places where there are no AC power sources or in places where the AC power sources are in a power failure state even if there are AC power sources and it is not allowed for the motors to stop on the spot.

## Description

### Field of Technology

This invention pertains to the power conversion field, specifically to a safety and protective power source system and an electric energy conversion method.

### Background

There are many kinds of conventional emergency power sources: Most emergency power sources invert DC voltage below 48VDC to 220V AC, with only several hundreds of watts of power, which are used mainly for the purpose of lighting and could not be used in industries. In addition, DC of 220VDC or 380VDC is also inverted to tri-phase 220AC voltage by many emergency power source production factories, and then 380VAC power source is provided for motors by way of boosting the transformers. However, the electrical circuits are complicated and the size is large in this kind of inversion way in which frequency modulation could not be achieved. The starting current of motors is quite large and the power of this kind of apparatus is 6-7 times larger than the motor's power when motors with the same power are to be started, which is uneasy to be carried out in production and is therefore very few in the market and is not practical.

It is urgent to develop a kind of apparatus which can work steadily, save energy, being superior in performance and convenient to be maintained, and being able to drive motors to work in places without AC power sources, based on this current situation.

### Summary of the Invention

In order to overcome the above drawbacks in the prior art, a safety and protective power source system and an electric energy conversion method are provided in this invention through design and research by technical staff after many times, which may provide a steady tri-phase 380V AC power source to motors, driving motors to work, through inversion by using DC power sources in places without AC or out of power.

According to the first aspect of the technical scheme in the invention, a safety protected power source system is provided, which includes DC power source, circuit interrupter, IGBT switch element, step-up transformer, single-phase rectifier, frequency converter, motor, controlling power source, CPU board, IGBT driving board , and feedback module HI/HV; an input power source being provided to the controlling power source and the IGBT switch element by the DC power source via circuit interrupter, the circuit interrupter serving as short-circuit protection, the controlling power source being connected to CPU board and to IGBT driving board, serving as CPU board's and IGBT driving board's working voltages, the signals output by the CPU board being sent onto the IGBT driving board , the IGBT being driven to be conducted by the signals output by the IGBT driving board, the input terminal of the step-up transformer being connected to the output terminal of the IGBT switch element, the output terminal of the step-up transformer being connected to the input terminal of the single-phase rectifier, the input terminal of frequency converter being connected to the output terminal of the single-phase rectifier, the output terminal of the frequency converter being connected to the input terminal of the motor, the feedback module HI/HV being connected to the output terminal of the single-phase rectifier and the feedback terminal of the CPU board, respectively, a steady working power source being provided to the frequency converter by the feedback module HI/HV.

Wherein the CPU board includes a controlling module and a regulation module, wherein the voltage feedback signals are sent into an opto-electric separation module after receipt by the regulation module and then be filtered and adjusted, and then be sent into the controlling module, two controlling signals being output by the controlling module, one of which controlling the signal SG2 to the driving board core module IC5 in the IGBT driving board, the other controlling the signal SG1 to the driving board core module IC7 in the IGBT driving board.

Preferably, the voltage feedback signal is switched in after the input terminal of the opto-electric module IC10 is connected with the resistor R26, the segregation between strong electricity output part and week electricity controlling part being achieved by the opto-electric segregation module IC10, one of the output terminals of the opto-electric segregation module IC10 being connected with the reference voltage U0, a filter circuit comprising the other terminal of the opto-electric segregation module IC10, resistor R25, capacitor C14, resistor R24, resistor R23, capacitor C13 being connected with the reverse input terminal of the regulation module IC11.

Preferably, the concurrent input terminal of the regulation module IC11 is connected with an adjustable potentiometer W1 which adjusts a threshold voltage, the output terminal and the reverse input terminal of the regulation module IC11 being connected with one capacitor C12 to constitute a proportion integral circuit, meanwhile the output terminal of the regulation module IC11 is connected with pin of the controlling module IC9 via one resistor R22.

Preferably, the controlling module IC9 is the core component of the CPU board, the current feedback signal being sent directly to pin 1 of the controlling module IC9, a resistor R28 being connected between pin 5 and pin 7 of the controlling module IC9, the resistor R28 being used for adjusting the dead time of the two signals' conduction in turn, meanwhile the pin 5 of the controlling module IC9 is connected to the ground via a capacitor C10, pin 6 of the controlling module IC9 being connected to the ground via a resistor R27; the frequencies of the controlling signals SG1, SG2 being determined by the values of the capacitor C10 and the resistor R27; pin 15 of the controlling module IC9 being connected with power source V5, pin 12 of the controlling module IC9 being connected to the ground, a resistor R31 being connected between pin 15 of the controlling module IC9 and pin 13 of the controlling module IC9 in order to limit the strength of the output current, a capacitor C11 being connected between pin 9 of the controlling module IC9 and pin 1 of the controlling module IC9 to constitute a compensation network; pin 8 of the controlling module IC9 being connected to the ground via an electrolytic capacitor C15 to achieve the soft start-up function; malfunction signals from the IGBT driving board being received by pin 10 of the controlling module IC9 so as to cut off controlling signals SG1, SG2 in time and protect the IGBT modules; moreover, one terminal of the parallel connection comprising a resistor R29 and a capacitor C09 is connected with pin 10 of the controlling module IC9, the other terminal of the parallel connection comprising a resistor R29 and a capacitor C09 being connected with the ground; one terminal of the serial connection comprising a resistor R30 and a LED D09 being connected with pin 10 of the controlling module IC9, the other terminal being connected with the ground; controlling signals SG1 and SG2 being provided for the IGBT driving circuit by pin 11 of the controlling module IC9 and pin 14 of the controlling module IC9, respectively, in the form of alternating conduction.

In addition, the IGBT driving board comprises 4 core controlling modules IC5, IC6, IC7 and IC8, 4 malfunction feedback opto-electric segregation modules IC1, IC2, IC3, and IC4 and a malfunction signal output module KZ; wherein the serial connection of the core controlling modules IC5 and IC6 being used for sending out 2 driving signals to 2 IGBT driving boards, respectively, after receiving the controlling signal SG2 sent out by the CPU board and the signal processing of the core controlling modules IC5 and IC6; the serial connection of the core controlling modules IC7 and IC8 being used for sending out 2 driving signals to 2 IGBT driving boards, respectively, after receiving the controlling signal SG1 sent out by the CPU board and the signal processing of the core controlling modules IC7 and IC8.

Preferably, malfunction signals are sent out by 4 core controlling modules IC5, IC6, IC7, and IC8 to 4 malfunction feedback opto-electric segregation modules IC1, IC2, IC3 and IC4 if there occurs any breakdown during operation progress, the malfunction signal being sent to the malfunction signal output module KZ after being processed by the malfunction feedback opto-electric segregation modules IC1, IC2, IC3 and IC4, finally the output terminal of the malfunction signal output module KZ being connected to the malfunction signal input terminal of the controlling module IC9 in the CPU board.

Preferably, one input terminal of the malfunction feedback opto-electric segregation module IC1 is connected to pin 4 of the core controlling module IC5 after its connection with resistor R17, the other input terminal of the malfunction feedback opto-electric segregation module IC1 being connected to pin 8 of the core controlling module IC5, the output terminals of the malfunction feedback opto-electric segregation module IC1 being connected afterwards with output terminals of the malfunction feedback opto-electric segregation modules IC2, IC3, and IC4 in parallel, respectively; one input terminal of the malfunction feedback opto-electric segregation module IC2 being connected with pin 4 of the core controlling module IC6 after its connection with resistor R20, the other input terminal of malfunction feedback opto-electric segregation module IC2 being connected with pin 8 of the core controlling module IC6, the output terminals of malfunction feedback opto-electric segregation module IC2 being connected afterwards with the output terminals of malfunction feedback opto-electric segregation modules IC1, IC3 and IC4 in parallel, respectively; one input terminal of the malfunction feedback opto-electric segregation module IC3 being connected with pin 4 of the core controlling module IC7 after its connection with resistor R18, the other input terminal of malfunction feedback opto-electric segregation module IC3 being connected with pin 8 of the core controlling module IC7, the output terminals of malfunction feedback opto-electric segregation module IC3 being connected afterwards with the output terminals of malfunction feedback opto-electric segregation modules IC1, IC2 and IC4 in parallel, respectively; one input terminal of the malfunction feedback opto-electric segregation module IC4 being connected with pin 4 of the core controlling module IC7 after its connection with resistor R19, the other input terminal of malfunction feedback opto-electric segregation module IC4 being connected with pin 8 of the core controlling module IC7, the output terminals of malfunction feedback opto-electric segregation module IC4 being connected afterwards with the output terminals of malfunction feedback opto-electric segregation modules IC1, IC2 and IC3 in parallel, respectively.

Furthermore, the IGBT driving board includes 4 core controlling modules IC5, IC6, IC7 and IC8; the controlling signal SG1 from the CPU board being connected to pin 14 of the core controlling module IC7, pin 13 of the core controlling module IC7 being connected to pin 14 of the core controlling module IC8, pin 13 of the core controlling module IC8 being connected to the ground, thus the input terminals of the core controlling modules IC7 and IC8 being connected in serial; meanwhile signals are output from core controlling module IC7 to IGBT driving board IGBT2, signals being output from core controlling module IC8 to IGBT driving board IGBT3; the anode of the zener diode DZ09 being connected with pin 1 of the core controlling module IC7, the cathode of the zener diode DZ09 being connected with pin 6 of the core controlling module IC7; resistor R06, diode D05 and diode D06, after their connection in serial, being connected with pin 1 of the core controlling module IC7 and collector C2 of the IGBT driving board IGBT2, respectively; one grid resistor R02 being connected between pin 5 of the core controlling module IC7 and the grid pole G2 of the IGBT driving board IGBT2, one protective resistor R14 and two zener diodes DZ11 and DZ12 being connected between grid pole G2 and emitter E2; pin 4 of the core controlling module IC7 being connected with the power source V3, pin 6 of the core controlling module IC7 being connected with power source N3, zener diode DZ10 being connected with resistor R10 in serial, the anode of the zener diode DZ10 being connected with pin 4 of the core controlling module IC7 afterwards, the other terminal of resistor R10 being connected with pin 6 of the core controlling module IC7; electrolytic capacitor C05 being connected with zener diode DZ10 in parallel, electrolytic capacitor C06 being connected with resistor R10 in parallel. The cathode of zener diode DZ10 is connected with emitter E2, pin 4 of the core controlling module IC7 being connected with one input terminal of the malfunction feedback opto-electric segregation module IC3 via one resistor R18, pin 8 of the core controlling module IC7 being connected with the other input terminal of the malfunction feedback opto-electric segregation module IC3. The anode of zener diode DZ13 is connected with pin 1 of the core controlling module IC8, the cathode of the zener diode DZ13 being connected with pin 6 of the core controlling module IC8; resistor R07, diode D07 and diode D08, after their connection in serial, being connected with pin 1 of the core controlling module IC8 and collector C3 of the IGBT driving board IGBT3, respectively; one grid resistor R03 being connected between pin 5 of the core controlling module IC8 and the grid pole G3 of the IGBT driving board IGBT3, one protective resistor R15 and two zener diodes DZ15 and DZ16 being connected between the grid pole G3 and the emitter E3; pin 4 of the core controlling module IC8 being connected with the power source V4, pin 6 of the core controlling module IC8 being connected with the power source N4; zener diode DZ14 being connected with resistor R11 in serial, the anode of zener diode DZ14 being connected with pin 4 of the core controlling module IC8 afterwards, the other terminal of resistor R11 being connected with pin 6 of the core controlling module IC8; electrolytic capacitor C07 being connected with zener diode DZ14 in parallel, electrolytic capacitor C08 being connected with resistor R11 in parallel, the cathode of zener diode DZ14 being connected with emitter E3, pin 4 of the core controlling module IC8 being connected with one input terminal of malfunction feedback opto-electric segregation module IC4 via one resistor R18, pin 8 of the core controlling module IC8 being connected with the other terminal of the malfunction feedback opto-electric segregation module IC4.

According to the second aspect of the technical scheme in the invention, motors are used to be driven by the above safety and protective power source system in places without AC power sources.

The technical scheme in the invention is adaptable and easy to maintain, having the advantages of no sparks and high reliability. It could be utilized in a wide range in various kinds of places where there are no AC power sources or in places where the AC power sources are in a power failure state even if there are AC power sources and it is not allowed for the motors to stop on the spot.

### Description of the Drawings

Figure 1 is a logic control diagram of the safety and protective power source system according the invention;
Figure 2 is a schematic view of the circuit of the safety and protective power source system according the invention;
Figure 3 is a schematic view of the connection between the CPU board and the peripheral elements of the safety and protective power source system according the invention;
Figure 4 is a schematic view of the IGBT driving circuit of the safety and protective power source system according the invention;
Figure 5 is a schematic view of the controlling power source wiring of the safety and protective power source system according the invention.

### Detailed Description of the Invention

The safety and protective power source system will be illustrated in detail below with reference to the figures. The content below is only for the purpose of illustration and it should be clear to those skilled in the art to know that all methods and systems that conform to the invention fall within the scope of the invention. In addition, the scope of protection of the invention should not be limited only to the specific configuration of the safety and protective power source system or the specific parameters of the parts.

The starting current of motors in the prior art is quite large, and the power of this kind of apparatus is 6-7 times larger than the motor's power when motors with the same power are to be started. Using of the technical scheme of the said safety and protective power source system of the invention solves the technical problems in the prior art such as the circuit being complicated, the size being large, and frequency modulation being unable to be achieved, technical drawback problems such as motors' start being uneasy to be realized in the current production being overcome; good technical effects being achieved in the stability and reliability of the motors' operation in production practices.

The core idea of the invention is: voltage being sent into a frequency converter after the current's switch from DC to AC to DC, AC power source being provided to drive motors to operate by the frequency conversion functions of the frequency converter. The applicable places of the invention are the places without AC power sources or the places where the AC power sources are in a power failure state even if there are AC power sources and it is not allowed for the motors to stop on the spot to provide power source to motors.

The inventive thinking of the invention lies in that, input power source of the controlling power source 8 and IGBT switch element 3 being provided by the DC power source 1 via the circuit interrupter 2, the circuit interrupter 2 serving as short-circuit protection, the controlling power source 8 which outputs voltages being connected to CPU board 9 and to IGBT driving board 10, serving as CPU board 9's and IGBT driving board 10's working voltages, two signals SG1 and SG2 output by the CPU board 9 being sent onto the IGBT driving board 10 after the CPU board 9's obtaining working voltage, the signal SG2 being sent into the circuit, which is formed of connecting the driving board core controlling modules IC5 and IC6 in the driving board in serial, after IGBT driving board 10's receipt of the two signals and processing, outputting two driving signals to drive the two IGBT to conduct; the signal SG1 being sent into the circuit, which is formed of connecting the driving board core controlling modules IC7 and IC8 in the driving board in serial, outputting two driving signals to drive another two IGBT to conduct; thus generating alternating voltage signals. This alternating voltage signals are sent to the primary windings in the input terminal of the transformer after step-up transformer 4's receipt of alternating voltage signals, and then one very high alternating voltage is generated in the secondary windings of the transformer by stepping-up, the very high alternating voltage being connected to the input terminal of the single-phase rectifier 5, being sent to the input terminal of the frequency converter 6 after single-phase rectification, meanwhile the voltage current feedback module HI/HV11 is added into the rectified circuit, detected voltage and current values being fed back to the feedback terminal of the CPU board for PWM to urge the output voltage to be stable and the current to be within the allowed scope of operation. Operations of the motor are controlled according to the working characteristics of the loaded motor 7 after the stable operation voltage has been obtained by the frequency converter 6.

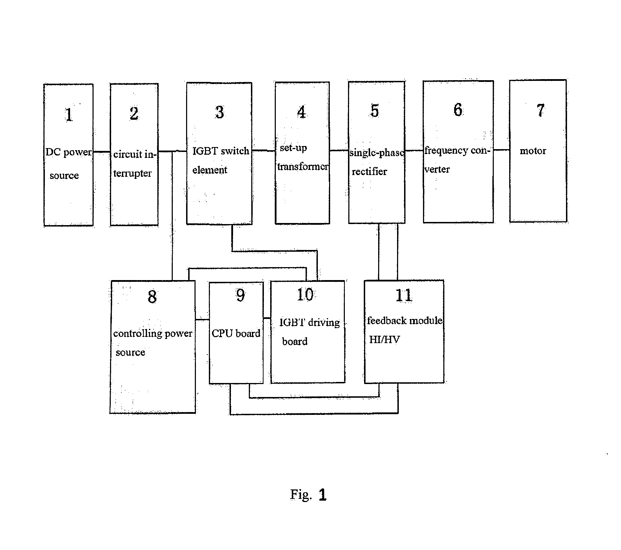

The safety and protective power source system applying the inventive thinking of the invention will be illustrated concretely below with reference to the figures 1-5.

A safety and protective power source system is shown in Figure 1, which includes DC power source 1, circuit interrupter 2, IGBT switch element 3, step-up transformer 4, single-phase rectifier 5, frequency converter 6, motor 7, controlling power source 8, CPU board 9, IGBT driving board 10, and feedback module HI/HV11.

An input power source is provided to the controlling power source 8 and the IGBT switch element 3 by the DC power source 1 via circuit interrupter 2, the circuit interrupter 2 serving as short-circuit protection, the controlling power source 8 which outputs voltages being connected to CPU board 9 and to IGBT driving board 10, serving as CPU board 9's and IGBT driving board 10's working voltages, the signals output by the CPU board 9 being sent onto the IGBT driving board 10, the IGBT being driven to be conducted by the signals output by the IGBT driving board 10, the input and output terminals of the step-up transformer 4 being connected to the output terminal of the IGBT and the input terminal of the single-phase rectifier 5, respectively, the input and output terminals of frequency converter 6 being connected to the output terminal of the single-phase rectifier 5 the input terminal of the motor 7, respectively, the feedback module HI/HV11 being connected to the output terminal of the single-phase rectifier 5 and the feedback terminal of the CPU board 9, respectively; a steady working power source being provided to the frequency converter 6 by the feedback module HI/HV11.

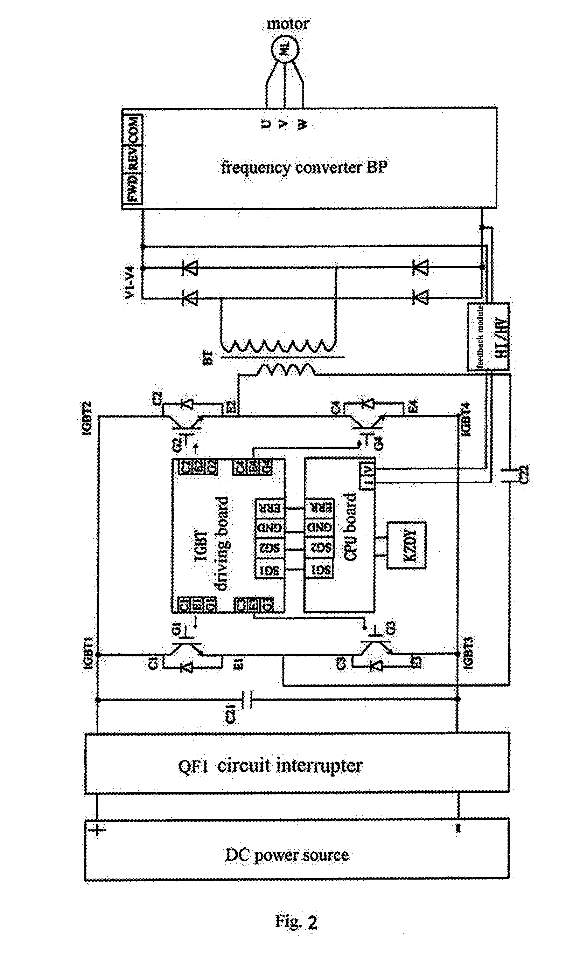

Figure 2 is a schematic view of the circuit of the safety and protective power source system; IGBT switch element 3 employing four IGBT modules as switch elements, the anode being connected to the collectors C1 and C2 of the switch elements IGBT1∼4 and one terminal of the absorption capacitor C21 via the circuit interrupter QF1 from the DC power source, the cathode of the DC power source being connected to the emitters E3 and E4 of the IGBT3 and IGBT 4 and the other terminal of the absorption capacitor C21, the emitter E1 of IGBT1, the collector C3 of IGBT3 and blocking capacitor C22 being connected; one terminal of the primary of the step-up transformer BT being connected to the blocking capacitor C22; the other terminal being connected to the emitter E2 of IGBT2 and the emitter E4 of IGBT4; the secondary of the step-up transformer BT being connected to the single-phase rectifier composed of 4 fast recovery diodes V1∼V4, the anode of the single-phase rectifier output being connected with the input terminal of frequency converter BP, the cathode of single-phase rectifier output being connected with the other terminal of frequency converter BP, finally the output terminal of frequency converter BP being connected with the motor 7. The input and output terminals of feedback module HI/HV being connected with the output terminal of single-phase rectifier and the terminals of current I, voltage V on the CPU board, respectively.

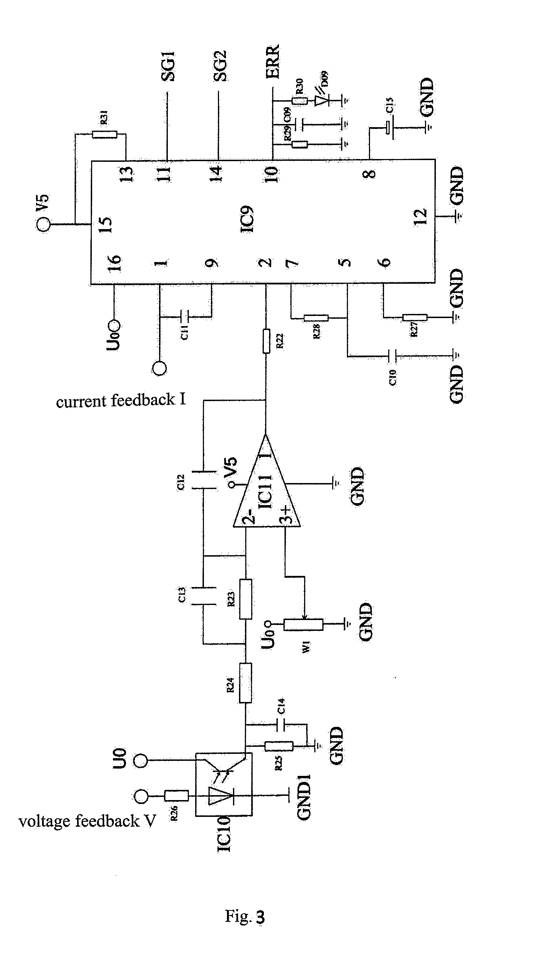

Figure 3 is a connection view of the peripheral elements of the CPU board in Figure 1. The CPU board includes a controlling module and a regulation module, wherein the voltage feedback signals are sent into an opto-electric separation module after receipt by the regulation module and then be filtered and adjusted, and then be sent into the controlling module, two controlling signals being output by the controlling module, one of which controlling the signal SG2 to the driving board core module IC5 in the IGBT driving board 10, the other controlling the signal SG1 to the driving board core module IC7 in the IGBT driving board 10.

The voltage feedback signal is switched in after the input terminal of the opto-electric module IC10 is connected with the resistor R26, the segregation between strong electricity output part and week electricity controlling part being achieved by the opto-electric segregation module IC10, one of the output terminals of the opto-electric segregation module IC10 being connected with the reference voltage U0, a filter circuit comprising the other terminal of the opto-electric segregation module IC10, resistor R25, capacitor C14, resistor R24, resistor R23, capacitor C13 being connected with the reverse input terminal of the regulation module IC11.

The concurrent input terminal of the regulation module IC11 is connected with an adjustable potentiometer W1 which adjusts a threshold voltage, the output terminal and the reverse input terminal of the regulation module IC11 being connected with one capacitor C12 to constitute a proportion integral circuit, meanwhile the output terminal of the regulation module IC11 is connected with pin 2 of the controlling module IC9 via one resistor R22.

The controlling module IC9 is the core component of the CPU board, the current feedback signal I being connected directly to pin 1 of the controlling module IC9, a resistor R28 being connected between pin 5 and pin 7 of the controlling module IC9, the resistor R28 being used for adjusting the dead time of the two signals' conduction in turn, meanwhile the pin 5 of the controlling module IC9 is connected to the ground via a capacitor C10, pin 6 of the controlling module IC9 being connected to the ground via a resistor R27; the frequencies of the controlling signals SG1, SG2 being determined by the values of the capacitor C10 and the resistor R27; pin 15 of the controlling module IC9 being connected with power source V5, pin 12 of the controlling module IC9 being connected to the ground, a resistor R31 being connected between pin 15 of the controlling module IC9 and pin 13 of the controlling module IC9 in order to limit the strength of the output current, a capacitor C11 being connected between pin 9 of the controlling module IC9 and pin 1 of the controlling module IC9 to constitute a compensation network; pin 8 of the controlling module IC9 being connected to the ground via an electrolytic capacitor C15 to achieve the soft start-up function; malfunction signals from the IGBT driving board being received by pin 10 of the controlling module IC9 so as to cut off controlling signals SG1, SG2 in time and protect the IGBT modules; moreover, one terminal of the parallel connection comprising a resistor R29 and a capacitor C09 is connected with pin 10 of the controlling module IC9, the other terminal of the parallel connection comprising a resistor R29 and a capacitor C09 being connected with the ground; one terminal of the serial connection comprising a resistor R30 and a LED D09 being connected with pin 10 of the controlling module IC9, the other terminal being connected with the ground; signals being provided for the IGBT driving circuit by pin 11 of the controlling module IC9 and pin 14 of the controlling module IC9, respectively, in the form of alternating conduction.

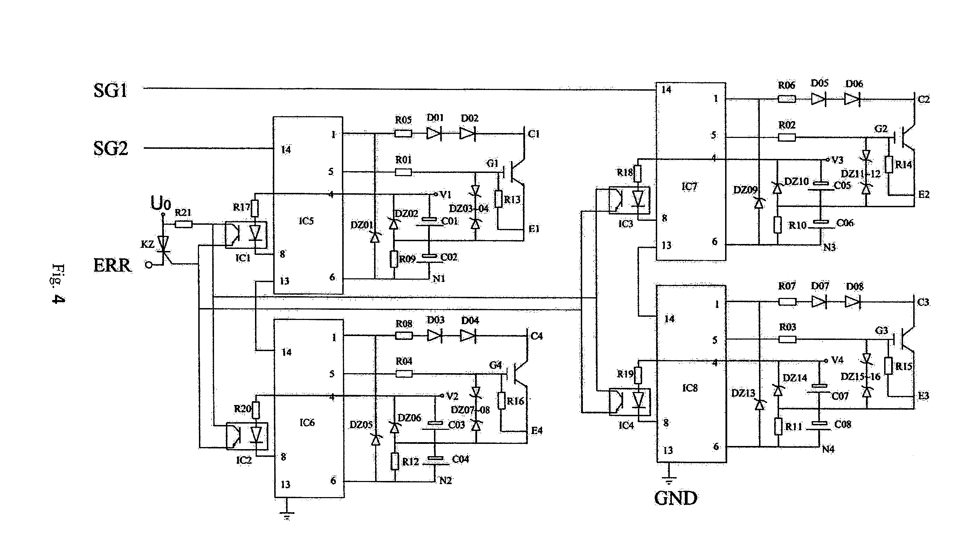

Figure 4 is a schematic view of the IGBT driving circuit: The IGBT driving board comprises 4 core controlling modules IC5, IC6, IC7 and IC8, 4 malfunction feedback opto-electric segregation modules IC1, IC2, IC3, and IC4 and a malfunction signal output module KZ; wherein the serial connection of the core controlling modules IC5 and IC6 being used for sending out 2 driving signals to 2 IGBT driving boards, respectively, after receiving the controlling signal SG2 sent out by the CPU board and the signal processing of the core controlling modules IC5 and IC6; the serial connection of the core controlling modules IC7 and IC8 being used for sending out 2 driving signals to 2 IGBT driving boards, respectively, after receiving the controlling signal SG1 sent out by the CPU board and the signal processing of the core controlling modules IC7 and IC8.

Malfunction signals are sent out by 4 core controlling modules IC5, IC6, IC7, and IC8 to 4 malfunction feedback opto-electric segregation modules IC1, IC2, IC3 and IC4 if there occurs any breakdown during operation progress, the malfunction signal being sent to the malfunction signal output module KZ after being processed by the malfunction feedback opto-electric segregation modules IC1, IC2, IC3 and IC4, finally the output terminal of the malfunction signal output module being connected to the malfunction signal input terminal of the controlling module IC9 in the CPU board.

One input terminal of the malfunction feedback opto-electric segregation module IC1 is connected to pin 4 of the core controlling module IC5 after its connection with resistor R17, the other input terminal of the malfunction feedback opto-electric segregation module IC1 being connected to pin 8 of the core controlling module IC5, the output terminals of the malfunction feedback opto-electric segregation module IC1 being connected afterwards with output terminals of the malfunction feedback opto-electric segregation modules IC2, IC3, and IC4 in parallel, respectively; one input terminal of the malfunction feedback opto-electric segregation module IC2 being connected with pin 4 of the core controlling module IC6 after its connection with resistor R20, the other input terminal of malfunction feedback opto-electric segregation module IC2 being connected with pin 8 of the core controlling module IC6, the output terminals of malfunction feedback opto-electric segregation module IC2 being connected afterwards with the output terminals of malfunction feedback opto-electric segregation modules IC1, IC3 and IC4 in parallel, respectively; one input terminal of the malfunction feedback opto-electric segregation module IC3 being connected with pin 4 of the core controlling module IC7 after its connection with resistor R18, the other input terminal of malfunction feedback opto-electric segregation module IC3 being connected with pin 8 of the core controlling module IC7, the output terminals of malfunction feedback opto-electric segregation module IC3 being connected afterwards with the output terminals of malfunction feedback opto-electric segregation modules IC1, IC2 and IC4 in parallel, respectively; one input terminal of the malfunction feedback opto-electric segregation module IC4 being connected with pin 4 of the core controlling module IC7 after its connection with resistor R19, the other input terminal of malfunction feedback opto-electric segregation module IC4 being connected with pin 8 of the core controlling module IC7, the output terminals of malfunction feedback opto-electric segregation module IC4 being connected afterwards with the output terminals of malfunction feedback opto-electric segregation modules IC1, IC2 and IC3 in parallel, respectively.

A silicon controlled rectifier is used to serve as malfunction signal output module KZ, the anode of the silicon controlled rectifier after resistor R21 being connected, with the gate pole at the same time, to the two output terminals of the malfunction feedback opto-electric segregation modules IC1, IC2, IC3 and IC4, the cathode being connected with pin 10 of the controlling module IC9 of the CPU board, the anode being connected with the reference voltage U0.

Among the core controlling modules IC5, IC6, IC7 and IC8, the controlling signal SG1 from the CPU board is connected to pin 14 of the core controlling module IC7, pin 13 of the core controlling module IC7 being connected to pin 14 of the core controlling module IC8, pin 13 of the core controlling module IC8 being connected to the ground, thus the input terminals of the core controlling modules IC7 and IC8 being connected in serial; meanwhile signals are output from core controlling module IC7 to IGBT driving board IGBT2, signals being output from core controlling module IC8 to IGBT driving board IGBT3; the anode of the zener diode DZ09 being connected with pin 1 of the core controlling module IC7, the cathode of the zener diode DZ09 being connected with pin 6 of the core controlling module IC7; resistor R06, diode D05 and diode D06, after their connection in serial, being connected with pin 1 of the core controlling module IC7 and collector C2 of the IGBT driving board IGBT2, respectively; one grid resistor R02 being connected between pin 5 of the core controlling module IC7 and the grid pole G2 of the IGBT driving board IGBT2, one protective resistor R14 and two zener diodes DZ11 and DZ12 being connected between grid pole G2 and emitter E2; pin 4 of the core controlling module IC7 being connected with the power source V3, pin 6 of the core controlling module IC7 being connected with power source N3, zener diode DZ10 being connected with resistor R10 in serial, the anode of the zener diode DZ10 being connected with pin 4 of the core controlling module IC7 afterwards, the other terminal of resistor R10 being connected with pin 6 of the core controlling module IC7; electrolytic capacitor C05 being connected with zener diode DZ10 in parallel, electrolytic capacitor C06 being connected with resistor R10 in parallel. The cathode of zener diode DZ10 is connected with emitter E2, pin 4 of the core controlling module IC7 being connected with one input terminal of the malfunction feedback opto-electric segregation module IC3 via one resistor R18, pin 8 of the core controlling module IC7 being connected with the other input terminal of the malfunction feedback opto-electric segregation module IC3. The anode of zener diode DZ13 is connected with pin 1 of the core controlling module IC8, the cathode of the zener diode DZ13 being connected with pin 6 of the core controlling module IC8; resistor R07, diode D07 and diode D08, after their connection in serial, being connected with pin 1 of the core controlling module IC8 and collector C3 of the IGBT driving board IGBT3, respectively; one grid resistor R03 being connected between pin 5 of the core controlling module IC8 and the grid pole G3 of the IGBT driving board IGBT3, one protective resistor R15 and two zener diodes DZ15 and DZ16 being connected between the grid pole G3 and the emitter E3; pin 4 of the core controlling module IC8 being connected with the power source V4, pin 6 of the core controlling module IC8 being connected with the power source N4; zener diode DZ14 being connected with resistor R11 in serial, the anode of zener diode DZ14 being connected with pin 4 of the core controlling module IC8 afterwards, the other terminal of resistor R11 being connected with pin 6 of the core controlling module IC8; electrolytic capacitor C07 being connected with zener diode DZ14 in parallel, electrolytic capacitor C08 being connected with resistor R11 in parallel, the cathode of zener diode DZ14 being connected with emitter E3, pin 4 of the core controlling module IC8 being connected with one input terminal of malfunction feedback opto-electric segregation module IC4 via one resistor R18, pin 8 of the core controlling module IC8 being connected with the other terminal of the malfunction feedback opto-electric segregation module IC4.

Also in Figure 4, the signal SG1 from the CPU board is connected to pin 14 of the core controlling module IC5, pin 13 of the core controlling module IC5 being connected to pin 14 of the core controlling module IC6, pin 13 of the core controlling module IC6 being connected to the ground, thus the input terminals of the core controlling modules IC5 and IC6 being connected in serial, meanwhile signals are output from core controlling module IC5 to IGBT driving board IGBT1, signals being output from core controlling module IC6 to IGBT driving board IGBT4; the anode of the zener diode DZ01 being connected with pin 1 of the core controlling module IC5, the cathode of the zener diode DZ01 being connected with pin 6 of the core controlling module IC5; resistor R05, diode D01 and diode D02, after their connection in serial, being connected with pin 1 of the core controlling module IC5 and collector C1 of the IGBT driving board IGBT1, respectively; one grid resistor R01 being connected between pin 5 of the core controlling module IC5 and the grid pole G1 of the IGBT driving board IGBT1, one protective resistor R13 and two zener diodes DZ03 and DZ04 being connected between grid pole G1 and emitter E1; pin 4 of the core controlling module IC5 being connected with the power source V1, pin 6 of the core controlling module IC5 being connected with power source N1; zener diode DZ02 being connected with resistor R09 in serial, the anode of the zener diode DZ02 being connected with pin 4 of the core controlling module IC5 afterwards, the other terminal of resistor R09 being connected with pin 6 of the core controlling module IC5; electrolytic capacitor C01 being connected with zener diode DZ02 in parallel, electrolytic capacitor C02 being connected with resistor R09 in parallel; the cathode of zener diode DZ02 is connected with emitter E1, pin 4 of the core controlling module IC5 being connected with one input terminal of the malfunction feedback opto-electric segregation module IC1 via one resistor R17, pin 8 of the core controlling module IC5 being connected with the other input terminal of the malfunction feedback opto-electric segregation module IC1. The anode of zener diode DZ05 is connected with pin 1 of the core controlling module IC6, the cathode of the zener diode DZ05 being connected with pin 6 of the core controlling module IC6; resistor R08, diode D03 and diode D04, after their connection in serial, being connected with pin 1 of the core controlling module IC6 and collector C4 of the IGBT driving board IGBT4, respectively; one grid resistor R04 being connected between pin 5 of the core controlling module IC6 and the grid pole G4 of the IGBT driving board IGBT4, one protective resistor R16 and two zener diodes DZ07 and DZ08 being connected between the grid pole G4 and the emitter E4; pin 4 of the core controlling module IC6 being connected with the power source V2, pin 6 of the core controlling module IC6 being connected with the power source N2; zener diode DZ06 being connected with resistor R12 in serial, the anode of zener diode DZ06 being connected with pin 4 of the core controlling module IC6 afterwards, the other terminal of resistor R12 being connected with pin 6 of the core controlling module IC6; electrolytic capacitor C03 being connected with zener diode DZ06 in parallel, electrolytic capacitor C04 being connected with resistor R12 in parallel, the cathode of zener diode DZ06 being connected with emitter E4, pin 4 of the core controlling module IC6 being connected with one input terminal of malfunction feedback opto-electric segregation module IC2 via one resistor R20, pin 8 of the core controlling module IC6 being connected with the other terminal of the malfunction feedback opto-electric segregation module IC2.

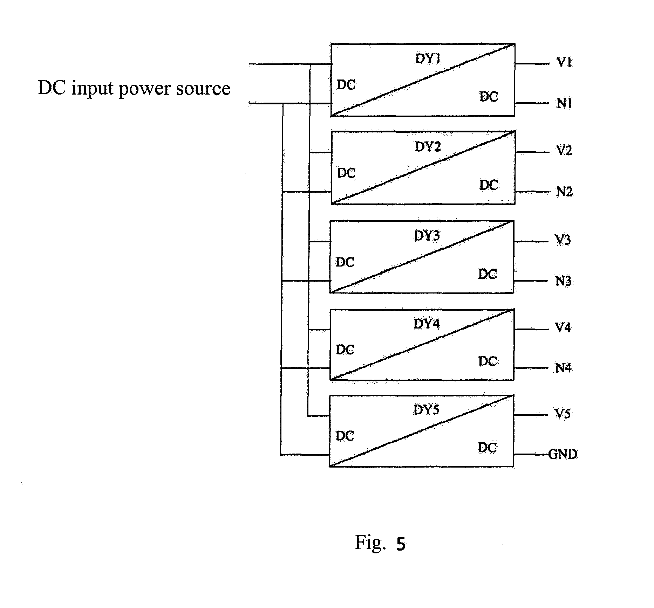

Figure 5 is a schematic view of the controlling power source wiring in Figure 1. The DC power source is connected to the input terminals of 5 independent switch power sources DY1, DY2, DY3, DY4 and DY5 via a circuit interrupter; a stable and low voltage being output through the voltage reduction process of the switch power sources; the output terminal V1 of the switch power source DY1 being connected to pin 4 of the core controlling module IC5, the output terminal N1 of the switch power source DY1 being connected to pin 6 of the core controlling module IC5; the output terminal V2 of the switch power source DY2 being connected to pin 4 of the core controlling module IC6, the output terminal N2 of the switch power source DY2 being connected to pin 6 of the core controlling module IC6; the output terminal V3 of the switch power source DY3 being connected to pin 4 of the core controlling module IC7, the output terminal N3 of the switch power source DY3 being connected to pin 6 of the core controlling module IC7; the output terminal V4 of the switch power source DY4 being connected to pin 4 of the core controlling module IC8, the output terminal N4 of the switch power source DY4 being connected to pin 6 of the core controlling module IC8; the output terminal V5 of the switch power source DY5 being connected to pin 15 of the controlling module IC9 of the CPU board, the output terminal GND of the switch power source DY5 being connected to pin 12 of the controlling module IC9 of the CPU board.

In this invention, the DC power source is composed of sealed maintenance-free lead acid storage cell groups connected in serial, the voltage of each storage cell being 12VDC, the capacitance being successively selectable according to power level, e.g.: 40AH, 65AH, 80AH, 100AH, 120AH, 150AH, 200AH, and so on. The characteristics of using such storage cells are stable performance, free from maintenance, long cycling life time, high reliability, and unnecessary to add acid like conventional storage cells.

In addition, the whole output power is increased by four IGBT1∼4 using full-bridge inversion. Its characteristics are that using new-style power electronic elements IGBT with large power ensures the frequency conversion power source to be provided with wide frequency range of application, large output power, high operation frequency, fast switch speed, and characteristics of good heat stability.

More specifically, the circuit of the CPU board to drive IGBT1, IGBT2, IGBT3 and IGBT4 to conduct is mainly comprised of the integrated package SG3525 and peripheral circuits connected with each other; and the driving board that drives IGBT1, IGBT2, IGBT3 and IGBT4 is mainly comprised of M57959AL and peripheral circuits connected with each other; the feedback circuit being composed of current voltage sensor HI/HV and integrated package LM324. While the controlling power source KZDY of the four driving boards and the CPU board is independently provided by 5 switch power sources.

Fe-based nanocrystalline material is employed in the high-frequency transformer BT used in this invention, whose characteristics are that size is small and output power is large. The input voltage ranges from 100-500VAC, and output voltage ranges from 300-2000VAC, and frequency ranges from 1000HZ-30000HZ. For example: the physical characteristics of this material are the large saturated magnetic induction (1.25 Tesla), small residual magnetic induction (<0.2 Tesla) and high magnetic permeability (>20000 Tesla), and so on. The high-frequency transformers BT may be used in parallel according to the power to make the output satisfy the requirements for large power.

A blocking capacitor C22 is connected in serial in the primary windings of the high-frequency transformer BT in case the bias phenomena of the high-frequency transformer BT causes heat or damages, and then the above phenomena are effectively prevented.

The high-frequency alternating voltage generated by the output of the high-frequency transformer BT is rectified to direct current by the single-phase rectifier bridge composed of 4 fast recovery diodes V1∼V4. The advantages of the fast recovery diodes V1∼V4 are good switch characteristics, high frequency, short response recovery time, large forward current, small size, easy installation, and so on. The choice of the capacitance of the fast recovery diodes V1∼V4 is also achieved by connecting in parallel to enlarge capacitance according to the load power.

The rectified DC power source is connected with the input terminal of the frequency converter BP, and then various kinds of control of the motors are conveniently achieved according to characteristics of the frequency converter BP. In addition, the choice and use of frequency converter is very common at present, the level scope being wide also.

The main advantages of using the power source apparatus of the invention lie in that:
1. New-style insulated-gate bipolar transistor IGBT is used as the switch element in the circuit, which brings advantages such as outlets being few, configuration being simple, installation and maintenance being convenient, etc.
2. Damages brought by high voltages generated by circuit wiring inductance can be absorbed effectively by using absorption capacitor C21.
3. Phenomena such as saturation caused by the magnetic core's deviation from equilibrium point of the transformer and damages to switch elements can be avoided effectively by using blocking capacitor C22.
4. The size of the transformer can be reduced by using high frequency.
5. Impacts brought by the current that is several times larger than the rated current when the motor starts can be restrained effectively by using frequency converter principle.
6. The output is stable by using double closed loop technology of current inner feedback and voltage outer feedback and pulse width modulation PWM technology.

The protective functions in the specific circuit of the invention are that: 1. Short circuit protection, 2. Over current protection, and 3. Under voltage protection of the controlling voltage.

The safety and protective power source system proposed in the invention has been clearly illustrated in detail as described above, however, it should be understood by those skilled in the art that many kinds of modifications may be made in the format and details without departing the spirit and scope of the invention defined by the appended claims. Therefore, all kinds of modifications to the technical schemes with reference to the invention should be included in the protective scope of the invention.

## Claims

1. A safety protected power source system, which includes DC power source (1), circuit interrupter (2), IGBT switch element (3), step-up transformer (4), single-phase rectifier (5), frequency converter (6), motor (7), controlling power source (8), CPU board (9), IGBT driving board (10), and feedback module HI/HV (11);
The input power source being provided to the controlling power source (8) and the IGBT switch element (3) by the DC power source (1) via circuit interrupter (2), the circuit interrupter (2) serving as short-circuit protection, the controlling power source (8) being connected to CPU board (9) and to IGBT driving board (10), serving as CPU board (9)'s and IGBT driving board (10)'s working voltages, the signals output by the CPU board (9) being sent onto the IGBT driving board (10), the IGBT being driven to be conducted by the signals output by the IGBT driving board (10), the input terminal of the step-up transformer (4) being connected to the output terminal of the IGBT switch element (3), the output terminal of the step-up transformer (4) being connected to the input terminal of the single-phase rectifier (5), the input terminal of frequency converter (6) being connected to the output terminal of the single-phase rectifier (5), the output terminal of the frequency converter (6) being connected to the input terminal of the motor (7), the feedback module HI/HV (11) being connected to the output terminal of the single-phase rectifier (5) and the feedback terminal of the CPU board (9), respectively, a steady working power source being provided to the frequency converter (6) by the feedback module HI/HV (11).

2. The said safety and protective power source system of claim 1, wherein the CPU board (1) includes a controlling module and a regulation module, wherein the voltage feedback signals are sent into an opto-electric separation module after receipt by the regulation module and then be filtered and adjusted, and then be sent into the controlling module, two controlling signals being output by the controlling module, one of which controlling the signal SG2 to the driving board core module IC5 in the IGBT driving board (10), the other controlling the signal SG1 to the driving board core module IC7 in the IGBT driving board (10).

3. The said safety and protective power source system of claim 2, wherein the voltage feedback signal is switched in after the input terminal of the opto-electric module IC10 is connected with the resistor R26, the segregation between strong electricity output part and week electricity controlling part being achieved by the opto-electric segregation module IC10, one of the output terminals of the opto-electric segregation module IC10 being connected with the reference voltage U0, a filter circuit comprising the other terminal of the opto-electric segregation module IC10, resistor R25, capacitor C14, resistor R24, resistor R23, capacitor C13 being connected with the reverse input terminal of the regulation module IC11.

4. The said safety and protective power source system of claim 2, wherein the concurrent input terminal of the regulation module IC11 is connected with an adjustable potentiometer W1 which adjusts a threshold voltage, the output terminal and the reverse input terminal of the regulation module IC11 being connected with one capacitor C12 to constitute a proportion integral circuit, meanwhile the output terminal of the regulation module IC11 is connected with pin 2 of the controlling module IC9 via one resistor R22.

5. The said safety and protective power source system of claim 2, wherein the controlling module IC9 is the core component of the CPU board, the current feedback signal I being sent directly to pin 1 of the controlling module IC9, a resistor R28 being connected between pin 5 and pin 7 of the controlling module IC9, the resistor R28 being used for adjusting the dead time of the two signals' conduction in turn, meanwhile the pin 5 of the controlling module IC9 is connected to the ground via a capacitor C10, pin 6 of the controlling module IC9 being connected to the ground via a resistor R27; the frequencies of the controlling signals SG1, SG2 being determined by the values of the capacitor C10 and the resistor R27; pin 15 of the controlling module IC9 being connected with power source V5, pin 12 of the controlling module IC9 being connected to the ground, a resistor R31 being connected between pin 15 of the controlling module IC9 and pin 13 of the controlling module IC9 in order to limit the strength of the output current, a capacitor C11 being connected between pin 9 of the controlling module IC9 and pin 1 of the controlling module IC9 to constitute a compensation network; pin 8 of the controlling module IC9 being connected to the ground via an electrolytic capacitor C15 to achieve the soft start-up function; malfunction signals from the IGBT driving board being received by pin 10 of the controlling module IC9 so as to cut off controlling signals SG1, SG2 in time and protect the IGBT modules; moreover, one terminal of the parallel connection comprising a resistor R29 and a capacitor C09 is connected with pin 10 of the controlling module IC9, the other terminal of the parallel connection comprising a resistor R29 and a capacitor C09 being connected with the ground; one terminal of the serial connection comprising a resistor R30 and a LED D09 being connected with pin 10 of the controlling module IC9, the other terminal being connected with the ground; controlling signals SG1 and SG2 being provided for the IGBT driving circuit by pin 11 of the controlling module IC9 and pin 14 of the controlling module IC9, respectively, in the form of alternating conduction.

6. The said safety and protective power source system of any one of the claims 1-5, wherein the IGBT driving board comprises 4 core controlling modules IC5, IC6, IC7 and IC8, 4 malfunction feedback opto-electric segregation modules IC1, IC2, IC3, and IC4 and a malfunction signal output module KZ; wherein the serial connection of the core controlling modules IC5 and IC6 being used for sending out 2 driving signals to 2 IGBT driving boards, respectively, after receiving the controlling signal SG2 sent out by the CPU board and the signal processing of the core controlling modules IC5 and IC6; the serial connection of the core controlling modules IC7 and IC8 being used for sending out 2 driving signals to 2 IGBT driving boards, respectively, after receiving the controlling signal SG1 sent out by the CPU board and the signal processing of the core controlling modules IC7 and IC8.

7. The said safety and protective power source system of claim 6, wherein malfunction signals are sent out by 4 core controlling modules IC5, IC6, IC7, and IC8 to 4 malfunction feedback opto-electric segregation modules IC1, IC2, IC3 and IC4 if there occurs any breakdown during operation progress, the malfunction signal being sent to the malfunction signal output module KZ after being processed by the malfunction feedback opto-electric segregation modules IC1, IC2, IC3 and IC4, finally the output terminal of the malfunction signal output module KZ being connected to the malfunction signal input terminal of the controlling module IC9 in the CPU board.

8. The said safety and protective power source system of claims 6, wherein one input terminal of the malfunction feedback opto-electric segregation module IC1 is connected to pin 4 of the core controlling module IC5 after its connection with resistor R17, the other input terminal of the malfunction feedback opto-electric segregation module IC1 being connected to pin 8 of the core controlling module IC5, the output terminals of the malfunction feedback opto-electric segregation module IC1 being connected afterwards with output terminals of the malfunction feedback opto-electric segregation modules IC2, IC3, and IC4 in parallel, respectively; one input terminal of the malfunction feedback opto-electric segregation module IC2 being connected with pin 4 of the core controlling module IC6 after its connection with resistor R20, the other input terminal of malfunction feedback opto-electric segregation module IC2 being connected with pin 8 of the core controlling module IC6, the output terminals of malfunction feedback opto-electric segregation module IC2 being connected afterwards with the output terminals of malfunction feedback opto-electric segregation modules IC1, IC3 and IC4 in parallel, respectively; one input terminal of the malfunction feedback opto-electric segregation module IC3 being connected with pin 4 of the core controlling module IC7 after its connection with resistor R18, the other input terminal of malfunction feedback opto-electric segregation module IC3 being connected with pin 8 of the core controlling module IC7, the output terminals of malfunction feedback opto-electric segregation module IC3 being connected afterwards with the output terminals of malfunction feedback opto-electric segregation modules IC1, IC2 and IC4 in parallel, respectively; one input terminal of the malfunction feedback opto-electric segregation module IC4 being connected with pin 4 of the core controlling module IC7 after its connection with resistor R19, the other input terminal of malfunction feedback opto-electric segregation module IC4 being connected with pin 8 of the core controlling module IC7, the output terminals of malfunction feedback opto-electric segregation module IC4 being connected afterwards with the output terminals of malfunction feedback opto-electric segregation modules IC1, IC2 and IC3 in parallel, respectively.

9. The said safety and protective power source system of any one of the claims 1-5, wherein the IGBT driving board includes 4 core controlling modules IC5, IC6, IC7 and IC8;
the controlling signal SG1 from the CPU board being connected to pin 14 of the core controlling module IC7, pin 13 of the core controlling module IC7 being connected to pin 14 of the core controlling module IC8, pin 13 of the core controlling module IC8 being connected to the ground, thus the input terminals of the core controlling modules IC7 and IC8 being connected in serial; meanwhile signals are output from core controlling module IC7 to IGBT driving board IGBT2, signals being output from core controlling module IC8 to IGBT driving board IGBT3; the anode of the zener diode DZ09 being connected with pin 1 of the core controlling module IC7, the cathode of the zener diode DZ09 being connected with pin 6 of the core controlling module IC7; resistor R06, diode D05 and diode D06, after their connection in serial, being connected with pin 1 of the core controlling module IC7 and collector C2 of the IGBT driving board IGBT2, respectively; one grid resistor R02 being connected between pin 5 of the core controlling module IC7 and the grid pole G2 of the IGBT driving board IGBT2, one protective resistor R14 and two zener diodes DZ11 and DZ12 being connected between grid pole G2 and emitter E2; pin 4 of the core controlling module IC7 being connected with the power source V3, pin 6 of the core controlling module IC7 being connected with power source N3, zener diode DZ10 being connected with resistor R10 in serial, the anode of the zener diode DZ10 being connected with pin 4 of the core controlling module IC7 afterwards, the other terminal of resistor R10 being connected with pin 6 of the core controlling module IC7; electrolytic capacitor C05 being connected with zener diode DZ10 in parallel, electrolytic capacitor C06 being connected with resistor R10 in parallel; the cathode of zener diode DZ10 being connected with emitter E2, pin 4 of the core controlling module IC7 being connected with one input terminal of the malfunction feedback opto-electric segregation module IC3 via one resistor R18, pin 8 of the core controlling module IC7 being connected with the other input terminal of the malfunction feedback opto-electric segregation module IC3; the anode of zener diode DZ13 being connected with pin 1 of the core controlling module IC8, the cathode of the zener diode DZ13 being connected with pin 6 of the core controlling module IC8; resistor R07, diode D07 and diode D08, after their connection in serial, being connected with pin 1 of the core controlling module IC8 and collector C3 of the IGBT driving board IGBT3, respectively; one grid resistor R03 being connected between pin 5 of the core controlling module IC8 and the grid pole G3 of the IGBT driving board IGBT3, one protective resistor R15 and two zener diodes DZ15 and DZ16 being connected between the grid pole G3 and the emitter E3; pin 4 of the core controlling module IC8 being connected with the power source V4, pin 6 of the core controlling module IC8 being connected with the power source N4; zener diode DZ14 being connected with resistor R11 in serial, the anode of zener diode DZ14 being connected with pin 4 of the core controlling module IC8 afterwards, the other terminal of resistor R11 being connected with pin 6 of the core controlling module IC8; electrolytic capacitor C07 being connected with zener diode DZ14 in parallel, electrolytic capacitor C08 being connected with resistor R11 in parallel, the cathode of zener diode DZ14 being connected with emitter E3, pin 4 of the core controlling module IC8 being connected with one input terminal of malfunction feedback opto-electric segregation module IC4 via one resistor R18, pin 8 of the core controlling module IC8 being connected with the other terminal of the malfunction feedback opto-electric segregation module IC4.

10. Use of the said safety and protective power source system of any one of the claims 1-9 to drive motors in places without AC power sources.
